# EUROPÄISCHE PATENTSCHRIFT

(11) **EP 2 034 461 B1**
(45) Veröffentlichungstag und Bekanntmachung des Hinweises auf die Patenterteilung: **28.05.2014**
(21) Anmeldenummer: 08104697.1
(22) Anmeldetag: 10.07.2008
(51) Int. Cl.: G08B 13/196, G06K 9/00

(54) **Verfahren zur Detektion und/oder Verfolgung von bewegten Objekten in einer Überwachungsszene mit Störern, Vorrichtung sowie Computerprogramm**
Method for detecting and/or tracking moved objects in a monitoring zone with stoppers, device and computer program
Procédé de détection et/ou de suivi d'objets mobiles dans une scène de surveillance présentant des perturbateurs, dispositif et programme informatique

(30) Priorität: 04.09.2007 DE 102007041893
(43) Veröffentlichungstag der Anmeldung: 11.03.2009
(73) Patentinhaber: ROBERT BOSCH GMBH, 70442 Stuttgart (DE)
(72) Erfinder: Yu, Jie, 31139 Hildesheim (DE); Ebling, Julia, 31139 Hildesheim (DE); Loos, Hartmut, 31141 Hildesheim (DE)

(56) Entgegenhaltungen:
- EP-A2- 1 631 073
- WO-A1-2006/104903
- US-A1- 2005 146 605
- US-A1- 2005 275 723
- US-B1- 6 985 172

## Beschreibung

### Stand der Technik

Die Erfindung betrifft ein Verfahren zur Detektion und/oder Verfolgung von bewegten Objekten in einer Überwachungsszene, in der neben den bewegten Objekten Störerobjekte und/oder Störbereiche - nachfolgend als Störer bezeichnet - auftreten können, wobei in der Überwachungsszene mehrere Regionen definiert werden, die in verschiedene Regionenklassen eingeteilt werden, wobei eine erste Regionenklasse sensitive Regionen umfasst, in denen keine und/oder zu vernachlässigende Störer angeordnet und/oder zu erwarten sind und wobei zur Detektion und/oder Verfolgung der bewegten Objekte in den sensitiven Regionen eine sensitive Inhaltsanalyse durchgeführt wird. Die Erfindung betrifft im Weiteren eine Vorrichtung, welche zur Durchführung des genannten Verfahrens ausgebildet ist, sowie ein entsprechendes Computerprogramm.

Videoüberwachungssysteme umfassen üblicherweise eine Mehrzahl von Überwachungskameras und werden eingesetzt, um öffentliche oder gewerbliche Bereiche zu überwachen. Beispiele für derartige Videoüberwachungssysteme sind in Bahnhöfen, Flughäfen, Fabriken, Schulen, Universitäten, Gefängnissen, Krankenhäusern etc. zu finden. Oftmals werden die von den Überwachungskameras gelieferten Bilddatenströme nicht mehr manuell von Überwachungspersonal beobachtet, sondern es werden Algorithmen zur Inhaltsanalyse der Bilddatenströme eingesetzt, um relevante Vorfälle automatisch zu detektieren und gegebenenfalls Alarm auszulösen. Diese automatisierte Vorgehensweise hat gegenüber dem Einsatz von Überwachungspersonal den Vorteil, dass erhebliche Personalkosten eingespart werden können und zudem die Überwachung unabhängig von der aktuellen Verfassung (Müdigkeit, etc.) des Beobachters ist.

Ein verbreiteter Ansatz zur automatischen Auswertung der Bilddatenströme ist es, bewegte Objekte vom (im Wesentlichen statischen) Szenenhintergrund zu trennen (Objektsegmentierung), über die Zeit zu verfolgen (Tracking) und bei relevanten Bewegungen Alarm auszulösen. Oftmals werden für die Objektsegmentierung die Bildunterschiede zwischen einem aktuellen Kamerabild und einem sogenannten Szenenreferenzbild ausgewertet, das den statischen Szenenhintergrund modelliert.

Derartige Videoüberwachungssysteme bzw. automatische Auswertungen sind beispielsweise aus der Offenlegungsschrift DE 199 32 662 A1 oder in der Offenlegungsschrift DE 102 10 926 A1 bekannt, die einen allgemeinen Stand der Technik bilden.

### Offenbarung der Erfindung

Erfindungsgemäß wird ein Verfahren mit den Merkmalen des Anspruchs 1, eine Vorrichtung mit den Merkmalen des Anspruchs 9 sowie ein Computerprogramm mit den Merkmalen des Anspruchs 10 vorgeschlagen. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird ein bildgestütztes Verfahren zur Detektion und/oder Verfolgung von bewegten Objekten in einer Überwachungsszene offenbart, welches vorzugsweise mittels digitaler Bildverarbeitung umgesetzt ist. In diesem Zusammenhang umfasst die Detektion das erstmalige Erkennen der bewegten Objekte und die Verfolgung das Wiedererkennen der bewegten Objekte in nachfolgenden Bildern der Überwachungsszene. Das Verfahren ist dazu ausgebildet, eine oder mehrere bewegte Objekte zu detektieren bzw. zu verfolgen.

Die Überwachungsszene wird bevorzugt über Überwachungskameras beobachtet, welche Videosequenzen ausgeben, die dann im Rahmen des Verfahrens verarbeitet werden. In der Überwachungsszene können zum einen die bewegten Objekte auftreten, zum anderen können Störerobjekte und/oder Störbereiche in der Überwachungsszene, insbesondere im Szenenvordergrund und/oder Szenenhintergrund, angeordnet sein. Zur Vereinfachung der Darstellung werden Störerobjekte sowie Störbereiche nachfolgend zusammenfassend als Störer bezeichnet.

Im Rahmen des Verfahrens werden in der Überwachungsszene mehrere Regionen definiert, welche eine beliebige Form, zum Beispiel rund, rechteckig oder quadratisch, aufweisen können, und überlappungsfrei oder auch überlappend angeordnet sein können. Regionen sind dabei als Bildausschnitte der Überwachungsszene definiert, welche über einen Überwachungszeitraum bevorzugt stationär positioniert sind.

Die Regionen werden in verschiedene Regionenklassen eingeteilt, wobei eine erste Regionenklasse sensitive Regionen umfasst, in denen keine und/oder zu vernachlässigende bzw. vernachlässigbare Störer angeordnet und/oder zu erwarten sind. Die Einteilung in die Regionenklassen kann beispielsweise manuell durch einen Benutzer und/oder automatisiert durch eine erste z.B. bildgestützte Inhaltsanalyse der Überwachungsszene. durchgeführt werden In den sensitiven Regionen wird eine sensitive Inhaltsanalyse, insbesondere Videoinhaltsanalyse, zur Detektion und/oder Verfolgen der bewegten Objekte durchgeführt. Die sensitive Inhaltsanalyse umfasst beispielsweise die Schritte von Bildung oder Übernahme eines Szenenreferenzbilds, Segmentierung von Objekten, Detektion und/oder Verfolgung der segmentierten Objekte über die Zeit.

Erfindungsgemäß wird vorgeschlagen, eine zweite Regionenklasse zu verwenden, in die halbsensitive Regionen einklassifiziert werden und/oder einklassifizierbar sind, wobei in den halbsensitiven Regionen insbesondere stationäre und/oder ständige Störer angeordnet und/oder zu erwarten sind. Zur Detektion und/oder Verfolgung der bewegten Objekte in den halbsensitiven Regionen wird eine halbsensitive Inhaltsanalyse durchgeführt, die in Hinblick auf die verwendeten Bildverarbeitungsalgorithmen gegenüber der sensitiven Inhaltsanalyse eingeschränkt und/oder abgewandelt ist.

Eine Überlegung der Erfindung ist es, dass die bekannten Bildverarbeitungsalgorithmen zur Detektion und/oder Verfolgung von bewegten Objekten, insbesondere im Rahmen der Trennung der bewegten Objekte von einem Szenenreferenzbild, so lang zufriedenstellend arbeiten, wie es sich um einen einfachen Szenenhintergrund und/oder eine weitgehend ungestörte Überwachungsszene handelt. Kritisch wird das übliche Vorgehen allerdings bei realen Überwachungsszenen, in denen Störbereiche und/oder Störobjekte auftreten können, wie zum Beispiel sich im Wind bewegende Bäume, Sträucher oder Hecken, aber auch bei einer vielbefahrenen Straße, auf der sich die bewegten Objekte voneinander oder von dem Szenenhintergrund nicht mehr fehlerfrei trennen lassen.

Wie auch bei einer bevorzugten Ausführungsform der Erfindung angesprochen ist es möglich, derartige Störerregionen als insensitiv in der Überwachungsszene zu markieren und von einer Inhaltsanalyse auszuschließen, so dass diese insensitiven Regionen in der Praxis blinde Flecken in der Videoüberwachung bilden.

Erfindungsgemäß wird dagegen vorgeschlagen, derartige insensitive Regionen durch halbsensitive Regionen zu ergänzen, wobei in den halbsensitiven Regionen zumindest eine eingeschränkte Inhaltsanalyse der Überwachungsszene durchgeführt wird. Zum einen ist es möglich, diese eingeschränkte Inhaltsanalyse durch Verwendung von vereinfachten Bildverarbeitungsalgorithmen umzusetzen, zum anderen ist es möglich, Informationen der bewegten Objekte, welche in den sensitiven Regionen erarbeitet wurden, in den halbsensitiven Regionen weiter zu verwenden und auf diese Weise die Detektion und/oder Verfolgung der bewegten Objekte in den halbsensitiven Regionen durch Informationsübergabe zu unterstützen. Zwar verbleiben bei der Videoüberwachung durch dieses Vorgehen immer noch schwer zu detektierende Bereiche, jedoch sind Regionen, welche als blinde Flecken ausgebildet sind, ausgeschlossen oder zumindest minimiert.

Erfindungsgemäß werden die Regionen in eine dritte Regionenklasse eingeteilt, welche insensitive Regionen umfasst, in denen z.B. Störer angeordnet sind, wobei in den insensitiven Bereichen keine Inhaltsanalyse zur Detektion und/oder Verfolgung der bewegten Objekte durchgeführt wird. Es werden somit die mehreren Regionen der Überwachungsszene in genau drei Regionenklassen eingeteilt, nämlich mit sensitiven, halbsensitiven und insensitiven Regionen. Bei einer erweiterten Ausführungsform der Erfindung sind mehrere halbsensitive Regionenklassen vorgesehen, wobei sich die verschiedenen halbsensitiven Regionenklassen durch die Art der Inhaltsanalyse unterscheiden.

Bei einer möglichen Umsetzung der Erfindung erfolgen in den halbsensitiven Regionen die Detektion und/oder die Verfolgung der bewegten Objekte datentechnisch unabhängig von der Detektion und/oder Verfolgung der bewegten Objekte in den sensitiven Regionen.

Bei einer Ausführungsalternative dieser Umsetzung werden bewegte Objekte detektiert und/oder verfolgt, indem ein gegenüber der halbsensitiven Region ungewöhnliches Bewegungsmuster ermittelt wird. Ein Beispiel für ein ungewöhnliches Bewegungsmuster liegt vor, wenn ein Objekt in der halbsensitiven Region sich gegen eine allgemeine Bewegungsrichtung in dieser halbsensitiven Region bewegt. Dieser Fall tritt in der Praxis z.B. auf, wenn eine Person oder ein Fahrzeug sich gegen eine allgemeine Lauf- bzw. Fahrrichtung bewegt. Ein anderes Beispiel eines ungewöhnlichen Bewegungsmusters liegt vor, wenn sich ein Objekt in der halbsensitiven Region mit einer gerichteten Bewegung bewegt, wohingegen in dieser halbsensitiven Region ansonsten nur ungerichtete Bewegungen erfassbar sind. Eine weitere Ausführungsalternative liegt vor, wenn Bewegungsmuster von Objekten mit vordefinierten Bewegungsmustern verglichen werden und bei einer Übereinstimmung diese Objekte als bewegte Objekte detektiert und/oder verfolgt werden.

Bei einer bevorzugten Realisierung werden die Bewegungsmuster durch die Analyse des optischen Flusses (optical flow) in den halbsensitiven Regionen detektiert. Der optische Fluss bezeichnet vorzugsweise ein Vektorfeld, das die 2D-Bewegungsrichtung und - geschwindigkeit für Bildpunkte bzw. Pixel oder Bildbereiche einer Bildsequenz angibt.

Eine vorteilhafte Alternative oder Ergänzung zu den vorhergehenden Maßnahmen ist gegeben, wenn in den halbsensitiven Regionen die bewegten Objekte über einen Merkmalsvergleich detektiert und/oder verfolgt werden. Die Merkmale der bewegten Objekte werden dabei mit Merkmalen von Referenzobjekten verglichen, welche beispielsweise in einer Referenzdatenbank abgelegt sind und z.B. von einem Benutzer ausgewählt werden können. Mögliche Merkmale sind zum Beispiel die sogenannten SIFT (Scale-invariant feature transform) -Merkmale, CDOF-Merkmale, KLT-Merkmale, oder Mean-Shift-Merkmale.

Bei einer weiteren Alternative oder Ergänzung der Erfindung werden die bewegten Objekte in den halbsensitiven Regionen mit Hilfe von in den sensitiven Regionen erfassten Bewegungs- und/oder Objekt- und/oder Merkmalsinformation detektiert und/oder verfolgt. Beispielsweise wird die Detektion bzw. Verfolgung eines bewegten Objekts noch fortgesetzt, wenn sich das bewegte Objekt von einer sensitiven Region in eine halbsensitive Region bewegt. Unterstützt wird die weitere Verfolgung dadurch, dass die Objekt-, Bewegungs-, und/oder Merkmalsinformationen von dem bewegten Objekt, welche in der sensitiven Region ermittelt wurden, zur Weiterverfolgung innerhalb der halbsensitiven Regionen verwendet wird. Alternativ hierzu werden für bewegte Objekte, die bereits an anderer Stelle in einem Überwachungsbereich aufgetreten sind, insbesondere bei derselben Kamera oder im selben Kameranetzwerk, Merkmale berechnet und abgespeichert, wobei durch Vergleich dieser gespeicherten Merkmale mit Merkmalen von Objekten in halbsensitiven Regionen die bewegten Objekte in den halbsensitiven Regionen wiedererkannt werden können und eine Detektion und/oder Weiterverfolgung dieser bewegten Objekte erfolgen kann.

Ein weiterer Gegenstand der Erfindung betrifft eine Vorrichtung mit den Merkmalen des Anspruchs 9, welche insbesondere zur Durchführung des soeben beschriebenen Verfahrens ausgebildet und/oder geeignet ist, wobei die Vorrichtung Bildersequenzen einer Überwachungsszene entgegennimmt, wobei in der Überwachungsszene neben einem oder mehreren bewegten Objekten Störerobjekte und/oder Störbereiche - nachfolgend zusammenfassend als Störer bezeichnet - auftreten können.

Die Vorrichtung weist ein Klassifizierungsmodul auf, welches ausgebildet ist, Regionen in der Überwachungsszene zu definieren und die Regionen in verschiedene Regionenklassen einzuteilen. Eine erste Regionenklasse betrifft sensitive Regionen, in denen keine und/oder zu vernachlässigende Störer angeordnet und/oder zu erwarten sind, eine zweite Regionenklasse betrifft halbsensitive Regionen, in denen Störer angeordnet und/oder zu erwarten sind. Die Vorrichtung weist mindestens ein erstes und ein zweites Analysemodul auf, wobei das erste Analysemodul ausgebildet ist, zur Detektion und/oder der Verfolgung der bewegten Objekte in den sensitiven Regionen eine sensitive Inhaltsanalyse durchzuführen, und das zweite Analysemodul ausgebildet ist, in den halbsensitiven Regionen eine halbsensitive Inhaltsanalyse durchzuführen, die gegenüber der sensitiven Inhaltsanalyse eingeschränkt und/oder abgewandelt ist. Die Inhaltsanalyse ist insbesondere als Videoinhaltsanalyse (VCA Video Content Analysis) ausgebildet und erfolgt bevorzugt über digitale Bildverarbeitung.

Ein weiterer Gegenstand der Erfindung betrifft ein Computerprogramm mit den Merkmalen des Anspruchs 10.

### Kurze Beschreibung der Zeichnungen

Weitere Merkmale, Vorteile und Wirkungen der Erfindung ergeben sich aus der nachfolgenden Beschreibung sowie den beigefügten Figuren eines bevorzugten Ausführungsbeispiels der Erfindung. Dabei zeigen:
- Figur 1: ein Blockdiagramm einer Vorrichtung als ein erstes Ausführungsbeispiel der Erfindung;
- Figur 2: ein Flussdiagramm eines Verfahrens als ein weiteres Ausführungsbeispiel der Erfindung;
- Figuren 3a und 3b: eine erste Beispielsszene zur Illustration der Arbeitsweise der Ausführungsbeispiele der Erfindung;
- Figuren 4a und 4b: eine zweite Beispielsszene zur Illustration der Arbeitsweise der Ausführungsbeispiele der Erfindung;.

Einander entsprechende oder gleiche Bestandteile der Figuren sind jeweils mit einander entsprechenden oder den gleichen Bezugszeichen versehen.

### Ausführungsform(en) der Erfindung

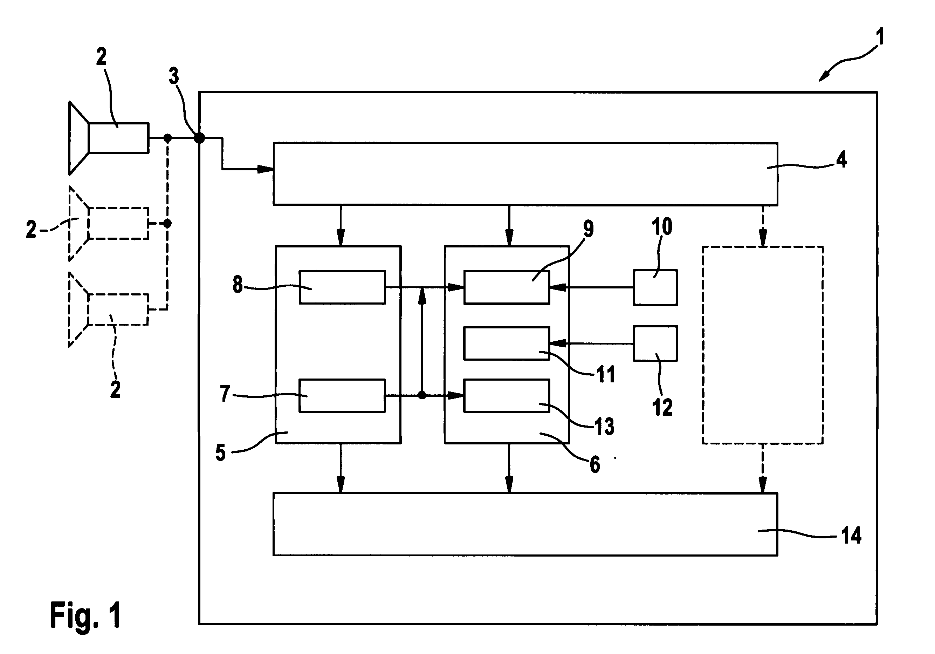

Die Figur 1 zeigt in einem schematischen Blockdiagramm eine Vorrichtung 1 zur Detektion und Verfolgung von bewegten Objekten in Überwachungsszene, die über eine oder mehrere Überwachungskameras 2 aufgenommen wird. Die Überwachungskameras 2 können Bestandteile eines Kameranetzwerks sein, welche eine komplexe oder verzweigte Überwachungsszene beobachten.

Die Bilddatenströme der Überwachungskameras 2 werden über eine Schnittstelle 3 an ein Klassifizierungsmodul 4 übergeben, welches ausgebildet ist, in der Überwachungsszene bzw. in dem Abbild der Überwachungsszene mehrere Regionen zu definieren. Diese Regionen können in ihrer Gesamtheit die gesamte Überwachungsszene abdecken, bei alternativen Ausführungsformen ist es auch möglich, dass durch die Regionen nur ein Teil der Überwachungsszene abgedeckt ist. Ferner können die Regionen überlappend angeordnet sein, oder bei anderen Ausführungsalternativen auch überlappungsfrei positioniert werden.

In einem nächsten Schritt werden in dem Klassifizierungsmodul 4 den Regionen Regionenklassen zugeteilt, wobei eine erste Regionenklasse sogenannte sensitive Regionen betrifft, in denen keine oder nur eine vernachlässigbare Anzahl von Störbereichen bzw. Störerobjekten - nachfolgend zusammenfassend Störer genannt - angeordnet sind. In diesen sensitiven Regionen ist - trotz der möglichen Existenz von wenigen Störern - eine Inhaltsanalyse, zum Beispiel über Objektsegmentierung und - verfolgung möglich. Eine zweite Regionenklasse betrifft halbsensitive Bereiche, in denen zumindest einige Störer angeordnet oder zu erwarten sind. In den halbsensitiven Regionen führen die üblichen Bildverarbeitungsalgorithmen, wie sie in den sensitiven Regionen angewendet werden - oftmals zu fehlerbehafteten Ergebnissen oder versagen sogar insgesamt. Um trotzdem noch Informationen aus den halbsensitiven Regionen schöpfen zu können, wird in diesen Regionen eine abgewandelte und/oder eingeschränkte Inhaltsanalyse durchgeführt, wie nachfolgend noch erläutert wird. Weitere, optionale Regionenklassen können insensitive Regionen betreffen, in denen Inhaltsanalysen auch im verminderten Umfang zu keinem verwertbaren Ergebnis führen.

Nach der Klassifizierung der verschiedenen Regionen in die Regionenklassen werden die Regionen an ein erstes Analysemodule 5, ein zweites Analysemodul 6 und gegebenenfalls weitere Analysemodule, die in der Figur 1 gestrichelt angedeutet sind, übergeben, wobei das erste Analysemodul 5 ausgebildet und/oder angeordnet ist, die sensitiven Bereiche mittels einer sensitiven Inhaltsanalyse zu analysieren. Das zweite Analysemodul 6 dagegen ist dazu ausgebildet und/oder angeordnet, eine halbsensitive Inhaltsanalyse im Bereich der halbsensitiven Regionen durchzuführen, wobei die halbsensitive Inhaltsanalyse gegenüber der sensitiven Inhaltsanalyse abgewandelt und/oder eingeschränkt ist.

Das erste Analysemodul 5 weist einen Verfolgungsblock 7 auf, welcher zur Umsetzung eines Bildverarbeitungsalgorithmus ausgebildet ist, um in den sensitiven Regionen ein bewegtes Objekt zu detektieren und/oder zu verfolgen. Beispielsweise wird im Rahmen des Bildverarbeitungsalgorithmus von der Überwachungsszene oder nur von den sensitiven Regionen ein Szenenreferenzbild oder ein Szenenreferenzmodell gebildet. Im Betrieb wird ein aktuelles Kamerabild der Überwachungskamera 2 mit dem Szenenreferenzbild verglichen, wobei die Differenzen als bewegte Bildbereiche klassifiziert werden. Diese bewegten Bildbereiche werden zu Objekten segmentiert und über die zeitlich aufeinanderfolgenden Bilder der Bildersequenzen der Überwachungskameras über die Zeit verfolgt. Alternativ hierzu können auch andere Algorithmen zur Objektdetektion oder -verfolgung eingesetzt werden.

Alternativ oder ergänzend kann ein Merkmalfunktionsblock 8 vorgesehen sein, welcher die bewegten Objekte mittels eines Vergleichs von spezifischen Merkmalen (Mean-Shift-, CDOF-, SIFT- und/oder KLT-Merkmale) detektiert und/oder verfolgt.

Das zweite Analysemodul 6 umfasst optional einen Merkmalvergleichsblock 9, welcher ausgebildet ist, vorgegebene Merkmale eines Objekts und somit eines oder mehrere der bewegten Objekts in den halbsensitiven Regionen zu detektieren und/oder über die Zeit zu verfolgen. Die Vorgabe der zu detektierenden Merkmalen erfolgt beispielsweise durch den Verfolgungsblock 7, wobei Merkmale eines bereits in der Überwachungsszene detektierten, bewegten Objektes an den Merkmalvergleichsblock 9 übergeben werden, durch den Merkmalfunktionsblock 8. Als weitere Möglichkeit werden die Merkmale aus einem Merkmalsdatenspeicher 10 ausgelesen, in dem Merkmale von verschiedenen Arten oder Gattungen von bewegten Objekten gespeichert sind. Die Auswahl bzw. Spezifizierung des zu suchenden, bewegten Objekts erfolgt dabei bevorzugt über den Benutzer.

Ergänzend kann das zweite Analysemodul 6 ein Flussmodul 11 aufweisen, welches den optischen Fluss in den halbsensitiven Regionen berechnet und auswertet. Zum einen kann das Flussmodul 11 den berechneten optischen Fluss nach einem Regelwerk auswerten, wobei beispielsweise Objekte, die sich gegen den sonstigen optischen Fluss in der halbsensitiven Region bewegen, detektiert werden oder, indem Objekte mit einer gerichteten Bewegung in einer halbsensitiven Region detektiert werden, in der ansonsten nur ungerichtete Bewegungsmuster festzustellen sind. Zum zweiten können Bewegungsmuster aus einem Musterspeicher 12 durch einen Benutzer vorgegeben werden, wobei durch einen Mustervergleich der Bewegungsmuster ein bewegtes Objekt detektiert und/oder verfolgt wird.

Als weitere Option weist das zweite Analysemodul 6 einen Verfolgungsblock 13 auf, welcher im Gegensatz zu dem Verfolgungsblock 7 zur Vereinfachung der Verfolgung von diesem eine Anfangsposition und/oder eine Anfangsbewegungsrichtung des zu verfolgenden, bewegten Objekts erhält.

Die Ergebnisse der Analysemodule 5 und 6 werden in einem Auswertungsmodul 14 gesammelt und bewertet. In Abhängigkeit von vorgebbaren Regeln werden Antwortreaktionen, wie zum Beispiel Alarmnachrichten oder dergleichen, ausgelöst.

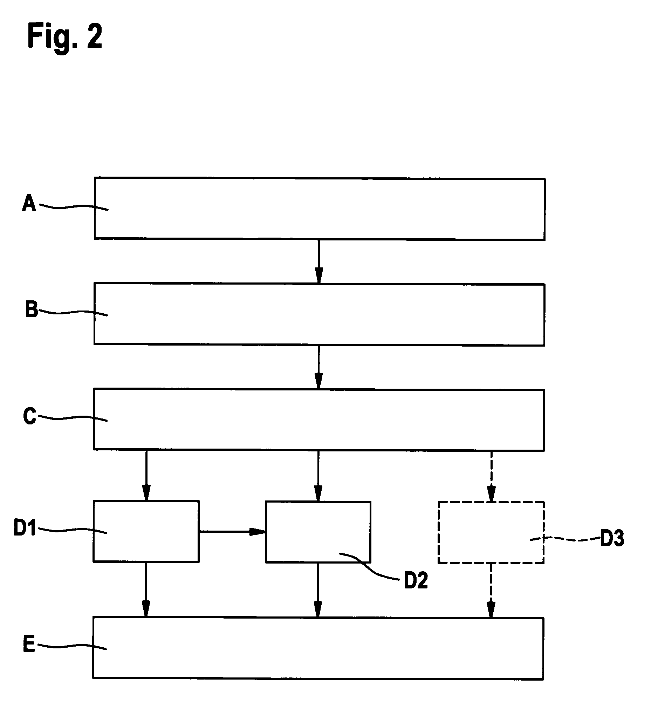

Die Figur 2 zeigt in einem Flussdiagramm ein Ausführungsbeispiel des erfindungsgemäßen Verfahrens, welches auf der Vorrichtung gemäß Figur 1 ausgeführt wird, wobei in einem ersten Schritt A die Bildersequenzen der Überwachungskamera 2 empfangen wird. In einem Schritt B werden verschiedene Regionen in der Überwachungsszene entweder manuell oder automatisch definiert. In einem Schritt C werden die definierten Regionen in Regionenklassen klassifziert, wobei eine erste Regionenklasse sensitive Regionen, eine zweite Regionenklasse halbsensitive Regionen und - optional - eine dritte Regionenklasse insensitive Regionen betrifft. In einem nächsten Schritt D 1, D2 bzw. D3 werden die verschiedenen Regionen mit Hilfe der Analysemodule 5 und 6 ausgewertet, wobei von dem ersten Analysemodul 5 Objekt-, Bewegungs-, und/oder Merkmalsinformationen von bewegten Objekten an das zweite Analysemodul 6 übergeben werden. Nach Durchführung der Objektdetektion bzw. - verfolgung in den Schritten D 1 bis D 3 werden die Ergebnisse in einem Schritt E zusammengefasst und die Antwortreaktionen ausgelöst.

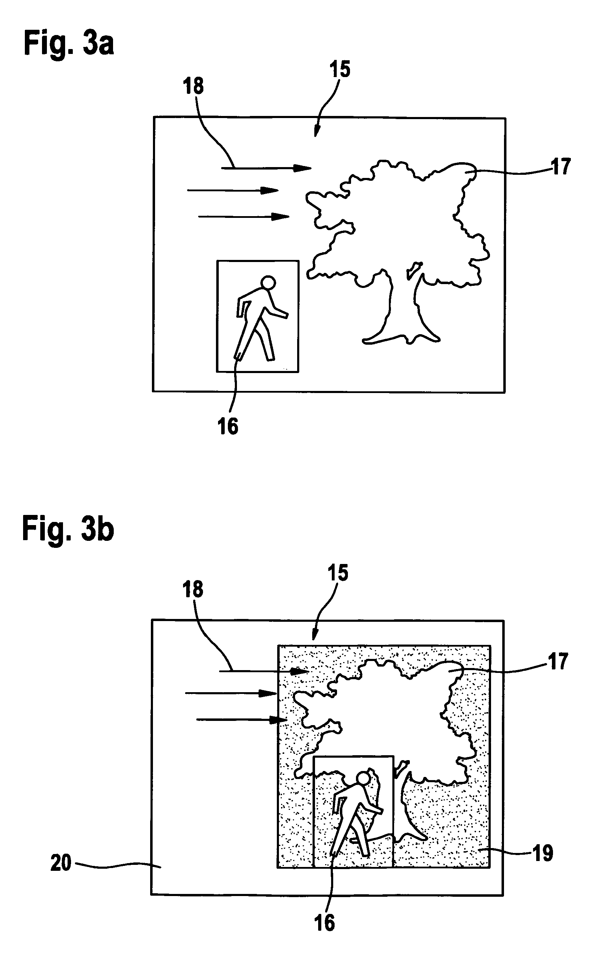

Die Figuren 3 a und 3b zeigen ein erstes Anwendungsbeispiel der Erfindung, wobei eine Überwachungsszene 15 gezeigt ist, in der eine Person 16 als ein Beispiel für ein bewegtes Objekt und ein Baum 17 unter Windeinfluss 18 als ein Beispiel für einen Störer dargestellt sind. Üblicherweise ist es schwierig, die Person 16 im Bereich des Störers 17 zu detektieren und/oder zu verfolgen, da einzelne Teile des Störers 17 als bewegtes Objekt bewertet werden und die sich vorbeibewegende Person 16 mit dem Störer 17 verschmilzt. Im Rahmen der Erfindung wird der Bereich um den Störer 17 als halbsensitive Region 19 klassifiziert und der Restbereich der Überwachungsszene 15 als sensitive Region 20 markiert. Während in der sensitiven Region 20 eine sensitive Inhaltsanalyse durchgeführt wird, werden in der halbsensitiven Region 19 Störungen mittels Bildverarbeitungsalgorithmen unterdrückt und bereits erkannte Objekte, wie zum Beispiel die Person 16, mit anderen Bildverarbeitungsalgorithmen als in der sensitiven Region 20 weiter verfolgt.

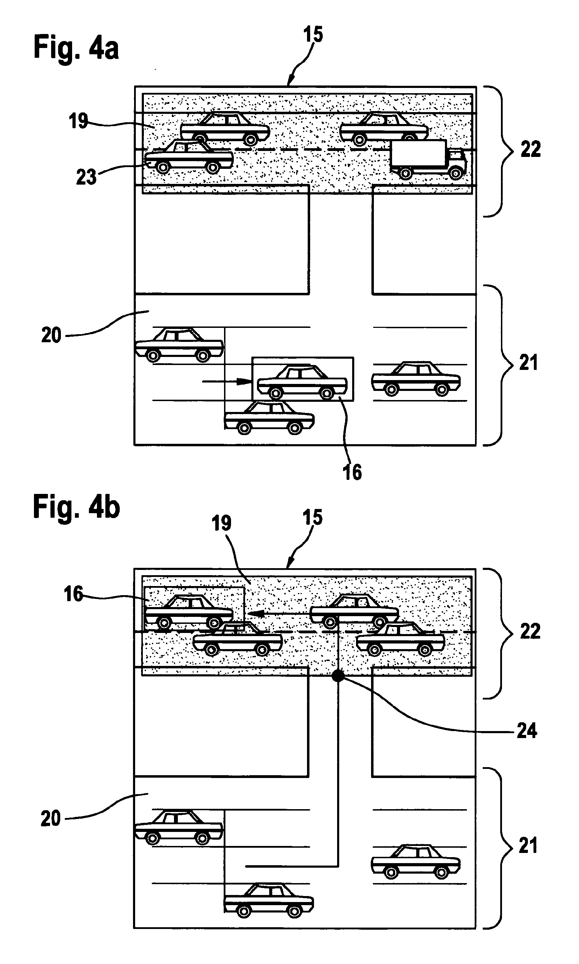

Die Figuren 4a und 4b zeigen eine zweite Beispielsszene als ein weiteres Ausführungsbeispiel der Erfindung, wobei die Überwachungsszene 15 einen Parkplatzbereich 21 und einen Straßenbereich 22 zeigt. Im Straßenbereich 22 fahren Autos 23 temporär so dicht nebeneinander, dass diese bei der Bildverarbeitung nicht mehr sicher voneinander separiert werden können. Durch Setzen eines halbsensitiven Bereichs 19 und eines sensitiven Bereichs 20, wird die sensitiven Inhaltsanalyse nur im Bereich des Parkplatzes 21 nicht jedoch im Straßenbereich 22 durchgeführt. Ein Objekt 16, in diesem Fall ein Fahrzeug, welches im überwachten Bereich, also im Parkplatzbereich 21, erkannt wird, wird jedoch auch in der halbsensitiven Region 19 weiterverfolgt, indem die Anfangsposition 24 zusammen mit einer Zeitmarke und einer Bewegungsrichtung an das zweite Analysemodul 6 übergeben wird, und auf diese Weise die Verfolgung erleichtert wird. Ergänzend können ungewöhnliche Bewegungen im Straßenbereich 22, wie zum Beispiel Geisterfahrer, u.a. durch Auswertung des optischen Flusses detektiert und verfolgt werden.

## Patentansprüche

1. Verfahren zur Detektion und/oder Verfolgung von bewegten Objekten (16) in einer Überwachungsszene (15), in der neben den bewegten Objekten (16) Störerobjekte und/oder Störbereiche - nachfolgend zusammenfassend als Störer (17, 23) bezeichnet - auftreten können,
wobei in der Überwachungsszene (15) mehrere Regionen definiert werden, die in verschiedene Regionenklassen eingeteilt werden,
wobei eine erste Regionenklasse (D1, 5) sensitive Regionen (20) umfasst, in denen keine und/oder zu vernachlässigende Störer (17, 23) angeordnet sind und/oder zu erwarten sind,
wobei zur Detektion und/oder zur Verfolgung der bewegten Objekte (16) in den sensitiven Regionen eine sensitive Inhaltsanalyse durchgeführt wird,
wobei eine zweite Regionenklasse (D2, 6) halbsensitive Regionen (19) umfasst, in denen Störer (17, 23) angeordnet und/oder zu erwarten sind, wobei zur Detektion und/oder zur Verfolgung der bewegten Objekte (16) in den halbsensitiven Regionen (19) eine halbsensitive Inhaltsanalyse durchgeführt wird, die gegenüber der sensitiven Inhaltsanalyse eingeschränkt und/oder abgewandelt ist,
**dadurch gekennzeichnet, dass**
eine dritte Regionenklasse (D3) insensitive Regionen umfasst, in denen Störer (17, 23) angeordnet sind, wobei in den insensitiven Regionen keine Inhaltsanalyse zur Detektion und/oder Verfolgung der bewegten Objekte (16) durchgeführt wird.

2. Verfahren nach einem der vorhergehenden Ansprüche, **dadurch gekennzeichnet, dass** in einer der halbsensitiven Regionen (19) bewegte Objekte (16) detektiert und/oder verfolgt werden, die ein ungewöhnliches Bewegungsmuster zeigen.

3. Verfahren nach Anspruch 2, **dadurch gekennzeichnet, dass** in einer der halbsensitiven Regionen (19) bewegte Objekte (16) detektiert und/oder verfolgt werden, die sich in der halbsensitiven Regionen (19) gegen eine allgemeine Bewegungsrichtung bewegen.

4. Verfahren nach Anspruch 2 oder 3, **dadurch gekennzeichnet, dass** in einer der halbsensitiven Regionen (19) bewegte Objekte (16) detektiert und/oder verfolgt werden, die sich in der halbsensitiven Region (19) mit einer gerichteten Bewegung vor einem Szenenbereich (15) mit ungerichteten Bewegungen bewegen.

5. Verfahren nach einem der Ansprüche 2 bis 4, **dadurch gekennzeichnet, dass** in den halbsensitiven Regionen (19) bewegte Objekte (16) über die Analyse des optischen Flusses detektiert und/oder verfolgt werden.

6. Verfahren nach einem der vorhergehenden Ansprüche, **dadurch gekennzeichnet, dass** in den halbsensitiven Regionen (19) bewegte Objekte (16) über einen Merkmalsvergleich detektiert und/oder verfolgt werden, wobei vorzugsweise vorgesehen ist, dass Merkmale der bewegten Objekte (16) mit Merkmalen von Referenzobjekten verglichen werden.

7. Verfahren nach Anspruch 6, **dadurch gekennzeichnet, dass** die Referenzobjekte bzw. deren Merkmale in einer Referenzdatenbank (10) abgelegt sind.

8. Verfahren nach einem der vorhergehenden Ansprüche, **dadurch gekennzeichnet, dass** in den halbsensitiven Regionen (19) bewegte Objekte (16) auf Basis von in den sensitiven Regionen (20) erfassten Bewegungs- und/oder Objekt- und/oder Merkmalsinformationen detektiert und/oder verfolgt und/oder weiterverfolgt werden.

9. Vorrichtung (1), insbesondere zur Durchführung des Verfahrens nach einem der vorhergehenden Ansprüche, mit einer Schnittstelle (3), welche ausgebildet ist, Bildersequenzen von einer Überwachungsszene zu empfangen, wobei in der Überwachungsszene neben einem oder mehreren bewegten Objekten (16) Störerobjekte und/oder Störregionen - nachfolgend zusammenfassend als Störer (17, 23) bezeichnet - auftreten können,
mit einem Klassifizierungsmodul (4), welches ausgebildet ist, Regionen in der Überwachungsszene zu definieren und die Regionen in verschiedene Regionenklassen einzuteilen, wobei eine erste Regionenklasse sensitive Regionen (20) umfasst, in denen keine und/oder zu vernachlässigende Störer (17, 23) angeordnet sind und/oder zu erwarten sind,
mit einem ersten Analysemodul (5), welches ausgebildet ist zur Detektion und/oder Verfolgung der bewegten Objekte (16) in den sensitiven Regionen (20) eine sensitive Inhaltsanalyse durchzuführen,
wobei das Klassifizierungsmodul (4) ausgebildet ist, die Regionen in eine zweite Regionenklasse einzuteilen, die halbsensitive Regionen (19) umfasst, in denen Störer (17, 23) angeordnet und/oder zu erwarten sind, und
wobei die Vorrichtung (1) ein zweites Analysemodul (6) aufweist, welches ausgebildet ist, zur Detektion und/oder Verfolgung der bewegten Objekte (16) in den halbsensitiven Regionen (19) eine halbsensitive Inhaltsanalyse durchzuführen, die gegenüber der sensitiven Inhaltsanalyse eingeschränkt und/oder abgewandelt ist,
**dadurch gekennzeichnet, dass**
eine dritte Regionenklasse (D3) insensitive Regionen umfasst, in denen Störer (17, 23) angeordnet sind, wobei in den insensitiven Regionen keine Inhaltsanalyse zur Detektion und/oder Verfolgung der bewegten Objekte (16) durchgeführt wird.

10. Computerprogramm mit Programm-Codemitteln, um alle Schritte des Verfahrens nach einem der Ansprüche 1 bis 8 durchzuführen, wenn das Programm auf einem Computer und/oder einer Vorrichtung nach Anspruch 9 ausgeführt wird.

## Claims

1. Method for detecting and/or tracking moved objects (16) in a monitoring scene (15), in which interfering objects and/or interfering regions - designated as stoppers (17, 23) in summary below - can occur in addition to the moved objects (16),
a plurality of regions, which are subdivided into various region classes, being defined in the monitoring scene (15),
a first region class (D1, 5) comprising sensitive regions (20), in which no stoppers (17, 23) and/or stoppers that are to be disregarded are arranged and/or are to be expected,
a sensitive content analysis being carried out in the sensitive regions in order to detect and/or track the moved objects (16),
a second region class (D2, 6) comprising semi-sensitive regions (19), in which stoppers (17, 23) are arranged and/or to be expected, a semi-sensitive content analysis, which is restricted and/or modified as compared with the sensitive content analysis, being carried out in the semi-sensitive regions (19) in order to detect and/or track the moved objects (16),
**characterized in that**
a third region class (D3) comprises non-sensitive regions, in which stoppers (17, 23) are arranged, no content analysis being carried out in the non-sensitive regions in order to detect and/or track the moved objects (16).

2. Method according to Claim 1, **characterized in that**, in one of the semi-sensitive regions (19), moved objects (16) which exhibit an unusual movement pattern are detected and/or tracked.

3. Method according to Claim 2, **characterized in that**, in one of the semi-sensitive regions (19), moved objects (16) which move counter to a general direction of movement in the semi-sensitive regions (19) are detected and/or tracked.

4. Method according to Claim 2 or 3, **characterized in that**, in one of the semi-sensitive regions (19), moved objects (16) which move with a directed movement against a scene region (15) with undirected movements in the semi-sensitive region (19) are detected and/or tracked.

5. Method according to one of Claims 2 to 4, **characterized in that**, in the semi-sensitive regions (19), moved objects (16) are detected and/or tracked via the analysis of the optical flow.

6. Method according to one of the preceding claims, **characterized in that**, in the semi-sensitive regions (19), moved objects (16) are detected and/or tracked via a feature comparison, provision preferably being made for features of the moved objects (16) to be compared with features of reference objects.

7. Method according to Claim 6, **characterized in that** the reference objects or their features are stored in a reference database (10).

8. Method according to one of the preceding claims, **characterized in that**, in the semi-sensitive regions (19), moved objects (16) are detected and/or tracked and/or tracked further on the basis of movement information and/or object information and/or feature information acquired in the sensitive regions (20).

9. Device (1), in particular for carrying out the method according to one of the preceding claims, having an interface (3) which is designed to receive image sequences from a monitoring scene, it being possible for interfering objects and/or interfering regions - designated as stoppers (17, 23) in summary below - to occur in the monitoring scene in addition to one or more moved objects (16),
having a classification module (4), which is designed to define regions in the monitoring scene and to subdivide the regions into various region classes, a first region class comprising sensitive regions (20), in which no stoppers (17, 23) and/or stoppers that are to be disregarded are arranged and/or are to be expected,
having a first analysis module (5), which is designed to carry out a sensitive content analysis in the sensitive regions (20) in order to detect and/or track the moved objects (16),
the classification module (4) being designed to subdivide the regions into a second region class which comprises semi-sensitive regions (19), in which stoppers (17, 23) are arranged and/or to be expected, and
the device (1) having a second analysis module (6), which is designed to carry out a semi-sensitive content analysis, which is restricted and/or modified as compared with the sensitive content analysis, in the semi-sensitive regions (19) in order to detect and/or track the moved objects (16),
**characterized in that**
a third region class (D3) comprises non-sensitive regions, in which stoppers (17, 23) are arranged, no content analysis being carried out in the non-sensitive regions in order to detect and/or track the moved objects (16).

10. Computer program having program code means in order to carry out all the steps of the method according to one of Claims 1 to 8 when the program is executed on a computer and/or a device according to Claim 9.

## Revendications

1. Procédé de détection et/ou de suivi d'objets mobiles (16) dans une scène de surveillance (15) dans laquelle, outre les objets mobiles (16), peuvent apparaître des objets perturbateurs et/ou des zones perturbatrices - désignés ci-après conjointement par perturbateurs (17, 23),
plusieurs régions étant définies dans la scène de surveillance (15), lesquelles sont divisées en différentes classes de région,
une première classe de région (D1, 5) comprenant des régions sensibles (20) dans lesquelles n'est disposé et/ou attendu aucun perturbateur (17, 23) et/ou dans un nombre négligeable,
une analyse sensible du contenu étant effectuée pour la détection et/ou le suivi des objets mobiles (16) dans les régions sensibles,
une deuxième classe de région (D2, 6) comprenant des régions semi-sensibles (19) dans lesquelles sont disposés et/ou attendus des perturbateurs (17, 23), une analyse semi-sensible du contenu étant effectuée pour la détection et/ou le suivi des objets mobiles (16) dans les régions semi-sensibles, laquelle est limitée et/ou modifiée par rapport à l'analyse sensible du contenu,
**caractérisé en ce**
**qu'**une troisième classe de région (D3) comprend des régions insensibles dans lesquelles sont disposés des perturbateurs (17, 23), aucune analyse du contenu destinée à la détection et/ou au suivi des objets mobiles (16) n'étant effectuée dans les régions insensibles.

2. Procédé selon la revendication 1, **caractérisé en ce que** dans l'une des régions semi-sensibles (19) sont détectés et/ou suivis les objets mobiles (16) qui présentent un modèle de mouvement inhabituel.

3. Procédé selon la revendication 2, **caractérisé en ce que** dans l'une des régions semi-sensibles (19) sont détectés et/ou suivis les objets mobiles (16) qui se déplacent dans les régions semi-sensibles (19) à l'opposé d'un sens de déplacement général.

4. Procédé selon la revendication 2 ou 3, **caractérisé en ce que** dans l'une des régions semi-sensibles (19) sont détectés et/ou suivis les objets mobiles (16) qui se déplacent dans la région semi-sensible (19) avec un mouvement dirigé devant une zone de scène (15) ayant des mouvements non dirigés.

5. Procédé selon l'une des revendications 2 à 4, **caractérisé en ce que** dans les régions semi-sensibles (19), les objets mobiles (16) sont détectés et/ou suivis par le biais de l'analyse du flux optique.

6. Procédé selon l'une des revendications précédentes, **caractérisé en ce que** dans les régions semi-sensibles (19), les objets mobiles (16) sont détectés et/ou suivis par le biais d'une comparaison des caractéristiques, en prévoyant de préférence que les caractéristiques des objets mobiles (16) soient comparées avec les caractéristiques d'objets de référence.

7. Procédé selon la revendication 6, **caractérisé en ce que** les objets de référence ou leurs caractéristiques sont enregistrés dans une base de données de référence (10).

8. Procédé selon l'une des revendications précédentes, **caractérisé en ce que** dans les régions semi-sensibles (19), les objets mobiles (16) sont détectés et/ou suivis et/ou poursuivis en se basant sur des informations de mouvement et/ou d'objet et/ou de caractéristique détectées dans les régions sensibles (20).

9. Dispositif (1), notamment pour mettre en oeuvre le procédé selon l'une des revendications précédentes, comprenant une interface (3) qui est configurée pour recevoir des séquences d'image d'une scène de surveillance, des objets perturbateurs et/ou des zones perturbatrices - désignés ci-après conjointement par perturbateurs (17, 23) - pouvant apparaître dans la scène de surveillance en plus d'un ou plusieurs objets mobiles (16),
comprenant un module de classification (4) qui est configuré pour définir des régions dans la scène de surveillance et pour diviser les régions en différentes classes de région, une première classe de région comprenant des régions sensibles (20) dans lesquelles n'est disposé et/ou attendu aucun perturbateur (17, 23) et/ou dans un nombre négligeable,
comprenant un premier module d'analyse (5) qui est configuré pour effectuer une analyse sensible du contenu pour la détection et/ou le suivi des objets mobiles (16) dans les régions sensibles (20),
le module de classification (4) étant configuré pour diviser les régions en une deuxième classe de région, laquelle comprend des régions semi-sensibles (19) dans lesquelles sont disposés et/ou attendus des perturbateurs (17, 23),
le dispositif (1) comprenant un deuxième module d'analyse (6) qui est configuré pour effectuer une analyse semi-sensible du contenu pour la détection et/ou le suivi des objets mobiles (16) dans les régions sémi-sensibles (19), laquelle est limitée et/ou modifiée par rapport à l'analyse sensible du contenu, **caractérisé en ce**
**qu'**une troisième classe de région (D3) comprend des régions insensibles dans lesquelles sont disposés des perturbateurs (17, 23), aucune analyse du contenu destinée à la détection et/ou au suivi des objets mobiles (16) n'étant effectuée dans les régions insensibles.

10. Programme informatique comprenant des moyens de code de programme pour exécuter toutes les étapes du procédé selon l'une des revendications 1 à 8 lorsque le programme est exécuté sur un ordinateur et/ou un dispositif selon la revendication 9.
